# DEMANDE DE BREVET EUROPEEN

(11) **EP 4 417 573 A1**
(43) Date de publication de la demande: **21.08.2024**
(21) Numéro de dépôt: 24155901.2
(22) Date de dépôt: 06.02.2024
(51) Int. Cl.: C01B 3/50, B01D 53/04, B01D 53/26, C01B 3/56

(54) **SYSTÈME DE PURIFICATION D HYDROGÈNE ET PROCÉDÉ DE PRODUCTION D HYDROGÈNE ASSOCIÉ**

(30) Priorité: 17.02.2023 FR 2301490
(71) Demandeur: Sertronic, 77200 Torcy (FR)
(72) Inventeur: LEGOIT, Marc, 77200 TORCY (FR)
(74) Mandataire: Cabinet Chaillot

(57) **Abrégé**

L'invention a pour objet un système de purification d'hydrogène une unité de purification catalytique (R100), une unité de sécheur à adsorption, un refroidisseur principal (E101) et une boucle de recirculation comprenant un éjecteur à effet Venturi (V100) configuré pour recevoir en entrée, comme gaz primaire ou moteur, un mélange gazeux provenant de l'unité de purification catalytique (R100) et, comme gaz secondaire, du gaz de régénération ayant circulé dans une colonne (S200, S300) de l'unité de sécheur à adsorption se trouvant dans un mode de régénération, pour délivrer en sortie un mélange du gaz primaire et du gaz secondaire vers le refroidisseur principal (E101).

## Description

La présente invention concerne le domaine technique des systèmes de purification d'hydrogène, et porte plus particulièrement sur un système de purification d'hydrogène avec boucle de recirculation.

Certains systèmes de purification d'hydrogène existants comprennent un sécheur à adsorption qui fonctionne en deux phases, une phase dite de séchage suivie d'une phase dite de régénération. Au cours de la phase de séchage, de l'hydrogène à purifier est amené à circuler dans le sécheur et des composés piégeables, majoritairement de l'eau, à éliminer pour purifier l'hydrogène, sont adsorbés dans le sécheur. Puis, au cours de la phase de régénération, un gaz de régénération est amené à circuler dans le sécheur pour retirer les composés piégeables adsorbés dans le sécheur, de manière à permettre une nouvelle phase de séchage.

De manière courante, le gaz de régénération utilisé dans les système existants est de l'hydrogène. Or, à l'issue de la phase de régénération, au moins une partie dudit gaz de régénération doit être conditionnée et purgée hors du sécheur.

Une quantité d'hydrogène pouvant représenter environ 10 % de l'hydrogène entrant dans le système de purification est ainsi perdue par la purge. On comprendra donc que cette purge a un coût économique et environnemental, puisque de l'énergie est utilisée pour produire l'hydrogène qui est purgé et perdu.

De plus, pour des raisons de sécurité, il faut un réseau spécifique de canalisations pour purger l'hydrogène à bonne distance des installations de purification (norme ATEX), ainsi que des systèmes anti-retour (garde d'eau), et il faut en outre mélanger l'hydrogène à de l'azote avant sa libération dans l'atmosphère.

Aujourd'hui toutes ces opérations représentent un coût important pour un produit qui ne peut pas être utilisé et implique directement une baisse du rendement global des systèmes de purification.

Par conséquent, les solutions de l'art antérieur proposées pour les systèmes de purification d'hydrogène présentent toujours des inconvénients et des améliorations sont possibles.

La présente invention vise notamment à résoudre les problèmes indiqués ci-dessus en proposant un système de purification d'hydrogène avec boucle de recirculation comprenant un éjecteur à effet Venturi, apte à permettre une purification d'hydrogène tout en réduisant la quantité d'hydrogène perdue, sans consommation d'énergie supplémentaire.

Ainsi, la présente invention a pour objet un système de purification d'hydrogène, configuré pour recevoir en entrée un mélange gazeux contenant de l'hydrogène, éliminer des composés étrangers du mélange gazeux et délivrer en sortie de l'hydrogène purifié, caractérisé par le fait qu'il comprend : une unité de purification catalytique, configurée pour éliminer du mélange gazeux injecté en entrée, par réaction catalytique, au moins un composé étranger ; un refroidisseur principal, disposé en aval de l'unité de purification catalytique et configuré pour refroidir le mélange gazeux ; un dévésiculeur, disposé en aval du refroidisseur principal et configuré pour éliminer des gouttelettes formées par condensation dans le mélange gazeux, le dévésiculeur formant une bifurcation entre une branche principale et une branche secondaire ; un purgeur , disposé en aval du dévésiculeur sur la branche secondaire et configuré pour collecter les gouttelettes éliminées par le dévésiculeur pour une évacuation hors du système ; une unité de sécheur à adsorption, disposée en aval du dévésiculeur sur la branche principale et configurée pour éliminer du mélange gazeux, par adsorption, au moins de l'eau et pour délivrer en sortie de l'hydrogène purifié, l'unité de sécheur à adsorption comprenant deux colonnes de séchage disposées en parallèle et le système étant configuré de telle sorte que, lorsque l'une desdites colonnes se trouve dans un mode dit de séchage, dans lequel le mélange gazeux est amené à circuler dans cette colonne et qu'au moins de l'eau est adsorbée, l'autre desdites colonnes se trouve dans un mode dit de régénération, dans lequel de l'hydrogène, dit gaz de régénération, est amené à circuler dans cette autre colonne pour la régénérer, c'est-à-dire pour évacuer de cette autre colonne au moins une quantité d'au moins de l'eau adsorbée, le mode de régénération étant maintenu pendant une durée inférieure ou égale à la durée pendant laquelle est maintenu le mode de séchage, et les colonnes étant commutées entre les modes de séchage et de régénération après une durée prédéfinie d'un cycle prédéfini ; et une boucle de recirculation comprenant un éjecteur à effet Venturi, disposé en aval de l'unité de purification catalytique et en amont du refroidisseur principal, l'éjecteur à effet Venturi étant configuré pour recevoir en entrée, comme gaz primaire ou moteur, le mélange gazeux provenant de l'unité de purification catalytique et, comme gaz secondaire, du gaz de régénération ayant circulé dans ladite colonne de l'unité de sécheur à adsorption se trouvant dans le mode de régénération, et pour délivrer en sortie un mélange du gaz primaire et du gaz secondaire vers le refroidisseur principal.

Le mélange gazeux introduit dans le système de purification peut être obtenu par toute méthode de production d'hydrogène connue, par exemple par électrolyse de l'eau (H₂O), par reformage du méthane (CH₄) ou par tout autre procédé. Les composés étrangers présents dans le mélange gazeux introduit dans le système de purification d'hydrogène peuvent par exemple être de l'oxygène, par exemple sous forme de dioxygène (O₂), de l'eau (H₂O), du monoxyde de carbone (CO) ou du dioxyde de carbone (CO₂). L'hydrogène purifié délivré en sortie par le système de purification se présente, de préférence, sous la forme de dihydrogène (H₂).

On comprendra que la boucle de recirculation permet de réintroduire et recycler de l'hydrogène utilisé comme gaz de régénération dans le système de purification d'hydrogène, de manière à limiter, de préférence à supprimer, une purge, et donc une perte, de gaz contenant de l'hydrogène vers l'atmosphère.

On comprendra donc que la boucle de recirculation permet de réduire le coût économique et environnemental du système de purification d'hydrogène et améliore la sécurité et le rendement global de celui-ci.

Par ailleurs, l'utilisation d'un éjecteur à effet Venturi, pour réinjecter du gaz de régénération, n'accroît pas le besoin en énergie du système de purification, ne nécessite pas de maintenance supplémentaire, et est sûre, notamment puisqu'il n'y a pas de pièces en mouvement susceptibles de s'user ou de chauffer en raison d'un frottement et que cette utilisation ne nécessite pas d'apport supplémentaire en électricité ou combustible.

On peut préciser ici que l'éjecteur à effet Venturi est configuré pour délivrer en sortie le mélange gazeux à tout débit adapté. Selon des exemples non limitatifs, le débit délivré en sortie par l'éjecteur à effet Venturi peut être de plusieurs Nm3/h, de plusieurs dizaines de Nm3/h, de plusieurs centaines de Nm3/h ou de plusieurs milliers de Nm3/h.

Selon un mode de réalisation particulier, l'unité de sécheur à adsorption est l'une parmi une unité de sécheur à adsorption à température variable (ATV) et une unité de sécheur à adsorption à pression variable (APV).

L'ATV est aussi connue sous le nom d'adsorption modulée en température (AMT) ou température swing adsorption (TSA) en anglais, et l'APV est aussi connue sous le nom d'adsorption modulée en pression (AMP) ou pressure swing adsorption (PSA) en anglais.

Les unités ATV et APV permettent notamment d'éliminer de manière efficace de l'eau présente dans un mélange gazeux.

Selon un mode de réalisation particulier, le système de purification d'hydrogène comprend en outre une unité de préchauffage, disposée en amont de l'unité de purification catalytique, configurée pour réchauffer le mélange gazeux reçu en entrée.

On comprendra que l'unité de préchauffage est configurée pour réchauffer le mélange gazeux reçu en entrée afin de faciliter et d'améliorer la purification du mélange gazeux par l'unité de purification catalytique disposée en aval. De préférence, l'unité de préchauffage est configurée pour réchauffer le mélange gazeux à une température comprise entre 20 et 150 °C, de préférence une température supérieure à la température d'entrée dans l'unité de purification.

Selon un mode de réalisation particulier, le système de purification d'hydrogène est un système de type dit DEOXODRYER et l'unité de purification catalytique est une unité de type dit DEOXO^{®} configurée pour éliminer de l'oxygène du mélange gazeux, par oxydation catalytique.

On comprendra que ce mode de réalisation est particulièrement adapté dans le cas où le mélange gazeux reçu en entrée est riche en oxygène, par exemple dans le cas où le mélange gazeux est obtenu par électrolyse de l'eau (H₂O) ou par tout autre moyen physico-chimique.

Selon un mode de réalisation particulier, le refroidisseur principal est un échangeur thermique à eau de refroidissement configuré pour refroidir le mélange gazeux sans contact direct entre le mélange gazeux et l'eau de refroidissement.

On comprendra que l'échangeur thermique à eau de refroidissement peut, par exemple, refroidir le mélange gazeux par refroidissement d'une canalisation dans laquelle circule le mélange gazeux. Par ailleurs, un échangeur à eau de refroidissement permet un refroidissement efficace du mélange gazeux jusqu'à une température définie à laquelle des gouttelettes se forment par condensation, sans nécessiter un apport important d'énergie.

Selon un mode de réalisation particulier, le système de purification comprend en outre une unité de production d'eau froide raccordée à des conduites d'entrée et de sortie d'eau de refroidissement de l'échangeur thermique à eau de refroidissement.

On comprendra que l'unité de production d'eau froide permet de pouvoir réguler précisément la température de l'eau de refroidissement.

Selon un mode de réalisation particulier, la boucle de recirculation comprend en outre un second refroidisseur, de préférence un refroidisseur à ailettes, disposé en amont de l'éjecteur à effet Venturi et configuré pour refroidir le gaz de régénération avant son entrée dans l'éjecteur à effet Venturi.

Le second refroidisseur est, de préférence, un refroidisseur à ailettes, de telle sorte qu'il ne nécessite pas d'apport supplémentaire d'énergie. On comprendra cependant que le second refroidisseur pourrait être d'un autre type, par exemple du même type que le refroidisseur principal, par exemple un échangeur thermique à eau de refroidissement.

Selon un mode de réalisation particulier, le système est configuré de telle sorte que 2 à 13 %, de préférence 5 à 10 %, de l'hydrogène délivré en sortie par la colonne de l'unité de sécheur à adsorption se trouvant dans le mode de séchage est utilisé comme gaz de régénération pour la colonne de l'unité de sécheur à adsorption se trouvant dans le mode de régénération, puis est dirigé par la boucle de recirculation dans l'éjecteur à effet Venturi.

On comprendra que l'utilisation de 2 à 13 %, de préférence de 5 à 10 %, de l'hydrogène délivré en sortie par la colonne de l'unité de sécheur à adsorption se trouvant dans le mode de séchage est une quantité permettant de garantir une régénération suffisante de la colonne se trouvant dans le mode de régénération pour permettre un prochain cycle de production.

Selon un mode de réalisation particulier, le système fonctionne selon des cycles de production de 25 h, pendant chacun desquels l'une des colonnes est maintenue dans le mode de séchage pendant 25 h et l'autre colonne est maintenue dans le mode de régénération pendant 10 h, les colonnes étant commutées entre les modes de séchage et de régénération après 25 h pour passer au cycle suivant.

On comprendra cependant facilement que d'autres durées sont possibles pour les cycles de production.

Selon un mode de réalisation particulier, le système comprend en outre un réseau de filtres à poussières disposé en aval de l'unité de sécheur à adsorption et configuré pour finaliser la purification de l'hydrogène avant une mise à disposition de l'hydrogène purifié en sortie du système.

L'invention a également pour objet un procédé de production d'hydrogène purifié utilisant un système tel que décrit ci-dessus, dans lequel un mélange gazeux contenant de l'hydrogène est injecté en entrée du système et de l'hydrogène purifié est récupéré en sortie.

On va maintenant décrire un mode de réalisation particulier de la présente invention, avec référence au dessin annexé.

Sur ce dessin :

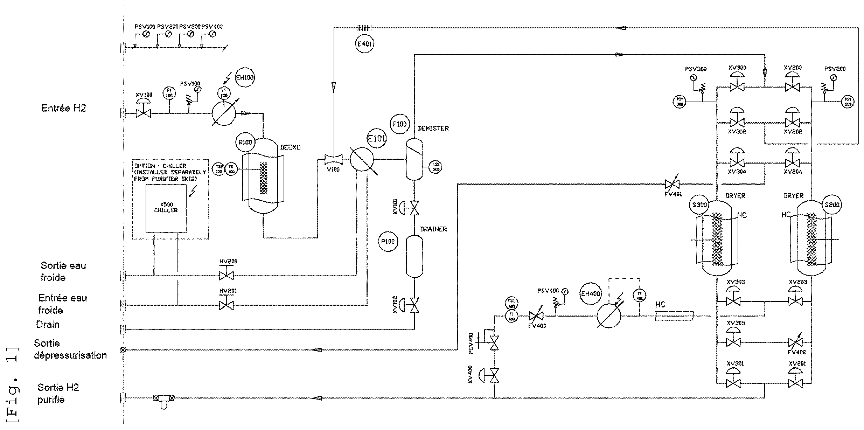

[Fig. 1] est une vue schématique d'un système de purification d'hydrogène selon un mode de réalisation de la présente invention.

La Figure 1 présente un système de purification d'hydrogène selon un mode de réalisation de l'invention, comprenant une unité de purification catalytique R100, un refroidisseur principal E101, un dévésiculeur F100, un purgeur P100, une unité de sécheur à adsorption comprenant deux colonnes S200, S300 et une boucle de recirculation comprenant un éjecteur à effet Venturi V100.

Ledit système de purification est configuré pour recevoir en entrée un mélange gazeux contenant de l'hydrogène, éliminer des composés étrangers du mélange gazeux, et délivrer en sortie de l'hydrogène purifié.

Le mélange gazeux est introduit dans le système par une vanne d'entrée XV100 et peut être obtenu par toute méthode de production d'hydrogène connue, par exemple par électrolyse de l'eau (H₂O), par reformage du méthane (CH₄) ou par tout autre procédé physico-chimique. Les composés étrangers présents dans le mélange gazeux introduit dans le système de purification d'hydrogène peuvent par exemple être de l'oxygène, par exemple sous forme de dioxygène (O₂), de l'eau (H₂O), du monoxyde de carbone (CO) ou du dioxyde de carbone (CO₂). L'hydrogène purifié délivré en sortie par le système de purification se présente de préférence sous la forme de dihydrogène (H₂).

Selon le mode de réalisation représenté sur la Figure 1, le système de purification comprend en outre une unité de préchauffage EH100 disposée en amont de l'unité de purification catalytique R100 et en aval de la vanne d'entrée XV100. On comprendra que l'unité de préchauffage EH100 est configurée pour réchauffer le mélange gazeux reçu en entrée afin de faciliter et d'améliorer la purification du mélange gazeux par l'unité de purification catalytique R100 disposée en aval. Ainsi, selon une variante non préférée, le système de purification peut être exempt d'unité de préchauffage EH100.

De préférence, l'unité de préchauffage EH100 est configurée pour réchauffer le mélange gazeux à un température comprise entre 20 et 150 °C, de préférence une température supérieure à la température d'entrée dans l'unité de purification.

On comprendra donc également que, dans les cas où le mélange gazeux est introduit dans le système de purification à une température déjà adéquate, le système de purification peut, en variante, ne pas comprendre d'unité de préchauffage EH100.

Après introduction dans le système de purification, et éventuellement circulation dans l'unité de préchauffage EH100, le mélange gazeux est introduit dans l'unité de purification catalytique R100.

L'unité de purification catalytique R100 est configurée pour éliminer des composés étrangers du mélange gazeux, par réaction catalytique, par exemple de l'oxygène.

Selon un mode de réalisation préféré, l'unité de purification catalytique R100 est une unité de type dit DEOXO^{®} configurée pour éliminer de l'oxygène, présent sous forme de dioxygène (O₂), du mélange gazeux, par oxydation catalytique. Le système de purification d'hydrogène est alors un système de type dit DEOXODRYER.

En sortie de l'unité de purification catalytique R100, le mélange gazeux est introduit dans l'éjecteur à effet Venturi V100 dont le fonctionnement sera décrit plus en détail ci-après, puis le mélange gazeux traverse le refroidisseur principal E101 qui est configuré pour refroidir le mélange gazeux.

Selon le mode de réalisation représenté sur la Figure 1, le refroidisseur principal E101 est un échangeur thermique à eau de refroidissement configuré pour refroidir le mélange gazeux sans contact direct entre le mélange gazeux et l'eau de refroidissement, par exemple par refroidissement d'une canalisation dans laquelle circule le mélange gazeux.

De préférence, dans le cas d'un échangeur thermique à eau de refroidissement, le système de purification comprend en outre une unité de production d'eau froide X500 raccordée à des conduites d'entrée et de sortie d'eau de refroidissement de l'échangeur thermique à eau de refroidissement, de manière à pouvoir réguler précisément la température de l'eau de refroidissement. De préférence encore, le système de purification comprend des vannes HV200, HV201 disposées sur les conduites d'entrée et de sortie de l'échangeur thermique à eau de refroidissement afin de permettre une régulation du débit d'eau de refroidissement dans lesdites conduites.

On comprendra cependant que d'autres refroidisseurs connus peuvent être utilisés en variante, de préférence des refroidisseurs permettant de refroidir le mélange gazeux de manière indirecte, c'est-à-dire sans contact direct entre un réfrigérant et le mélange gazeux, de manière à ne pas introduire de nouveaux composés étrangers dans le mélange gazeux. Ainsi, en variante, le refroidisseur peut, par exemple, être un échangeur thermique utilisant un autre fluide de refroidissement, par exemple un fluide cryogénique, ou un refroidisseur à ailettes.

En raison du passage dans le refroidisseur principal E101, des gouttelettes se forment par condensation dans le mélange gazeux, à partir de certains composés étrangers encore présents dans le mélange gazeux. Ces gouttelettes, majoritairement d'eau (H₂O), peuvent ensuite être éliminées du mélange gazeux lors du passage du mélange gazeux dans le dévésiculeur F100.

Le dévésiculeur F100 peut être de tout type connu, apte à éliminer des gouttelettes présentes dans un gaz, et ne sera pas décrit plus en détail ici.

Comme cela est représenté sur la Figure 1, le dévésiculeur F100 forme une bifurcation entre une branche principale et une branche secondaire du système de purification.

Le purgeur P100 est disposé en aval du dévésiculeur F100, sur la branche secondaire, et est configuré pour collecter les gouttelettes éliminées par le dévésiculeur F100, avant une évacuation de celles-ci hors du système.

De préférence, afin de réguler l'évacuation des gouttelettes hors du système, deux vannes XV101, XV102 sont respectivement disposées entre le dévésiculeur F100 et le purgeur P100, et en aval du purgeur P100.

L'unité de sécheur à adsorption est disposée en aval du dévésiculeur F100, sur la branche principale, et est configurée pour éliminer de l'eau du mélange gazeux, par adsorption.

Selon les besoins, l'unité de sécheur à adsorption peut en outre être configurée pour éliminer d'autres composés étrangers piégeables du mélange gazeux, comme par exemple du dioxyde de carbone (CO₂) ou du monoxyde de carbone (CO).

De préférence, l'unité de sécheur à adsorption est une unité de sécheur à adsorption à température variable (ATV), aussi appelée adsorption modulée en température (AMT) et température swing adsorption (TSA) en anglais, ou une unité de sécheur à adsorption à pression variable (APV), aussi appelée adsorption modulée en pression (AMP) et pressure swing adsorption (PSA) en anglais.

Comme cela est représenté sur la Figure 1, l'unité de sécheur à adsorption comprend deux colonnes S200, S300 de séchage disposées en parallèle et comprenant de préférence chacune un lit d'adsorption. De plus, chacune des deux colonnes S200, S300 est configurée pour être successivement apte à fonctionner dans un mode dit de séchage et un mode dit de régénération.

Dans le mode de séchage, le mélange gazeux est amené à circuler dans la colonne S200, S300 et les composés étrangers piégeables sont adsorbés dans le lit d'adsorption, par exemple l'eau (H₂O), le dioxyde de carbone (CO₂) ou le monoxyde de carbone (CO).

Dans le mode de régénération, de l'hydrogène, dit gaz de régénération, est amené à circuler dans la colonne S200, S300 pour la régénérer, c'est-à-dire pour évacuer de la colonne S200, S300 au moins une quantité des composés étrangers piégeables adsorbés dans le lit d'adsorption, les composés étrangers piégeables sont alors captés par le gaz de régénération et extraits avec celui-ci.

Par ailleurs, le système de purification est configuré pour fonctionner selon des cycles de production. Au cours d'un cycle de production, l'une des deux colonnes S200, S300 de l'unité de sécheur à adsorption est amenée à fonctionner dans le mode de séchage et l'autre des deux colonnes S200, S300 est amenée à fonctionner dans le mode de régénération.

De plus, les colonnes S200, S300 sont commutées entre les modes de séchage et de régénération après une durée prédéfinie d'un cycle prédéfini, et pour chaque cycle de production, le mode de régénération est maintenu pendant une durée inférieure ou égale à la durée pendant laquelle est maintenu le mode de séchage.

Selon un mode de réalisation préféré, le système de production est configuré de telle sorte qu'un cycle de production dure 25 heures, et pour que l'une des deux colonnes S200, S300 fonctionne dans le mode de séchage pendant 25 heures et que l'autre des deux colonnes S200, S300 fonctionne dans le mode de régénération pendant 10 heures.

Au moment d'un changement de cycle, la colonne S200, S300 qui a fonctionné en mode de séchage pendant le cycle précédent passe en mode de régénération, et la colonne S200, S300 qui a fonctionné en mode de régénération pendant le cycle précédent passe en mode de séchage. Ainsi, le système de purification permet une production continue d'hydrogène purifié, tout en permettant la régénération successive des colonnes S200, S300 de l'unité de sécheur à adsorption.

Comme indiqué plus haut, le gaz de régénération utilisé est de l'hydrogène. Il s'agit, de préférence, d'hydrogène purifié délivré en sortie par la colonne S200, S300 fonctionnant en mode de séchage qui est réintroduit dans la colonne S200, S300 fonctionnant en mode de régénération.

Comme cela est représenté sur la Figure 1, le système de purification d'hydrogène comprend en outre une pluralité de vannes XV200, XV300, XV201, XV301, XV203, XV303 XV204, XV304, XV305, FV402 configurées pour permettre le fonctionnement des colonnes S200, S300 en mode de séchage et en mode de régénération, et pour délivrer l'hydrogène purifié en sortie.

De plus, pour des raisons de sécurité, le système de purification comprend de préférence une vanne de sécurité FV401 configurée pour décharger au moins une partie du mélange gazeux ou de l'hydrogène purifié, en cas d'incident.

De préférence, 2 à 13 %, de préférence encore 5 à 10 %, de l'hydrogène délivré en sortie par la colonne S200, S300 de l'unité de sécheur à adsorption se trouvant dans le mode de séchage est utilisé comme gaz de régénération pour la colonne S200, S300 de l'unité de sécheur à adsorption se trouvant dans le mode de régénération.

De plus, comme cela est représenté sur la Figure 1, le système de purification d'hydrogène selon l'invention comprend en outre une boucle de recirculation comprenant un éjecteur à effet Venturi V100.

Selon le mode de réalisation représenté sur la Figure 1, la boucle de recirculation prend naissance au niveau de l'unité de sécheur à adsorption, entre une paire de vannes de recirculation XV202, XV302, et s'étend jusqu'à l'éjecteur à effet Venturi V100, disposé en aval de l'unité de purification catalytique R100 et en amont du refroidisseur principal E101.

La paire de vannes de recirculation XV202, XV302 est configurée pour diriger une partie du gaz de régénération utilisé dans l'unité de sécheur à adsorption, de préférence la totalité du gaz de régénération, vers la boucle de recirculation.

L'éjecteur à effet Venturi V100 est configuré pour recevoir en entrée à la fois un gaz primaire et un gaz secondaire, le gaz primaire étant utilisé comme gaz moteur pour entraîner le gaz secondaire et pour mélanger le gaz primaire et le gaz secondaire.

Le système de purification d'hydrogène selon l'invention est configuré pour délivrer le mélange gazeux sortant de l'unité de purification catalytique R100 en tant que gaz primaire, et du gaz de régénération en tant que gaz secondaire.

Ainsi, l'éjecteur à effet Venturi V100 est configuré pour recevoir en entrée, comme gaz primaire ou moteur, le mélange gazeux provenant de l'unité de purification catalytique R100 et, comme gaz secondaire, du gaz de régénération ayant circulé dans la colonne S200, S300 de l'unité de sécheur à adsorption se trouvant dans le mode de régénération, et pour délivrer en sortie un mélange du gaz primaire et du gaz secondaire, vers le refroidisseur principal E101.

On peut préciser ici que l'éjecteur à effet Venturi V100 est configuré pour délivrer en sortie le mélange gazeux à tout débit adapté. Selon des exemples non limitatifs, le débit délivré en sortie par l'éjecteur à effet Venturi peut être de plusieurs Nm3/h, de plusieurs dizaines de Nm3/h, de plusieurs centaines de Nm3/h ou de plusieurs milliers de Nm3/h.

Le système de purification d'hydrogène selon l'invention permet donc de réintroduire et recycler une quantité du gaz de régénération, de préférence la totalité du gaz de régénération, dans le système de purification, de manière à limiter, de préférence à supprimer, une purge, et donc une perte, de gaz contenant de l'hydrogène vers l'atmosphère.

On comprendra donc que la boucle de recirculation permet de réduire le coût économique et environnemental du système de purification d'hydrogène et améliore la sécurité et le rendement global de celui-ci.

Par ailleurs, l'utilisation d'un éjecteur à effet Venturi V100, pour réinjecter du gaz de régénération, n'accroît pas le besoin en énergie du système de purification, ne nécessite pas de maintenance supplémentaire, et est sûre, notamment puisqu'il n'y a pas de pièces en mouvement susceptibles de s'user ou de chauffer en raison d'un frottement et que cette utilisation ne nécessite pas d'apport supplémentaire en électricité ou combustible.

De préférence, et comme cela est représenté sur la Figure 1, la boucle de recirculation comprend en outre un second refroidisseur E401 disposé en amont de l'éjecteur à effet Venturi et configuré pour refroidir le gaz de régénération avant son entrée dans l'éjecteur à effet Venturi.

Le second refroidisseur E401 est, de préférence, un refroidisseur à ailettes, de telle sorte qu'il ne nécessite pas d'apport supplémentaire d'énergie.

On comprendra cependant que le second refroidisseur pourrait être d'un autre type, par exemple du même type que le refroidisseur principal E101, par exemple un échangeur thermique à eau de refroidissement.

On comprendra également que selon une variante non préférée du mode de réalisation représenté sur la Figure 1, en utilisant un second refroidisseur E401 suffisamment performant pour abaisser la température du gaz de régénération à la température à laquelle refroidit le refroidisseur principal E101, il est possible de disposer l'éjecteur à effet Venturi V100 directement en amont du dévésiculeur F100, en aval du refroidisseur principal E101.

On comprendra aussi que selon une autre variante non préférée du mode de réalisation représenté sur la Figure 1, en utilisant un second refroidisseur E401 suffisamment performant pour abaisser la température du gaz de régénération à la température à laquelle refroidit le refroidisseur principal E101 et en disposant un second dévésiculeur (non représenté), éventuellement couplé à un second purgeur (non représenté), entre le second refroidisseur E401 et l'éjecteur à effet Venturi V100, il est possible de disposer l'éjecteur à effet Venturi V100 directement en amont de l'unité de sécheur à adsorption, en aval du dévésiculeur F100.

De préférence, et comme cela est représenté sur la Figure 1, le système de purification d'hydrogène comprend en outre un réseau de filtres à poussières EH400, disposé en aval de l'unité de sécheur à adsorption, configuré pour finaliser la purification de l'hydrogène par une élimination de poussières, avant une mise à disposition de l'hydrogène purifié en sortie du système de purification d'hydrogène par l'intermédiaire de vannes PSV400, XV400 et PCV400.

Le système selon l'invention comprend en outre un automate ou autre organe de commande, relié aux différents éléments du système et aux différentes vannes pour les piloter conformément aux cycles de production. Le pilotage peut, par exemple, être d'au moins l'un des types suivants : électrique, électronique, hydraulique ou pneumatique.

Il est bien entendu que le mode de réalisation particulier qui vient d'être décrit a été donné à titre indicatif et non limitatif, et que des modifications peuvent être apportées sans que l'on s'écarte pour autant du cadre de la présente invention.

## Revendications

1. - Système de purification d'hydrogène, configuré pour recevoir en entrée un mélange gazeux contenant de l'hydrogène, éliminer des composés étrangers du mélange gazeux et délivrer en sortie de l'hydrogène purifié, **caractérisé par le fait qu'**il comprend :
- une unité de purification catalytique (R100), configurée pour éliminer du mélange gazeux injecté en entrée, par réaction catalytique, au moins un composé étranger ;
- un refroidisseur principal (E101), disposé en aval de l'unité de purification catalytique (R100) et configuré pour refroidir le mélange gazeux ;
- un dévésiculeur (F100), disposé en aval du refroidisseur principal (E101) et configuré pour éliminer des gouttelettes formées par condensation dans le mélange gazeux, le dévésiculeur (F100) formant une bifurcation entre une branche principale et une branche secondaire ;
- un purgeur (P100), disposé en aval du dévésiculeur (F100) sur la branche secondaire et configuré pour collecter les gouttelettes éliminées par le dévésiculeur (F100) pour une évacuation hors du système ;
- une unité de sécheur à adsorption, disposée en aval du dévésiculeur (F100) sur la branche principale et configurée pour éliminer du mélange gazeux, par adsorption, au moins de l'eau et pour délivrer en sortie de l'hydrogène purifié, l'unité de sécheur à adsorption comprenant deux colonnes (S200, S300) de séchage disposées en parallèle et le système étant configuré de telle sorte que,
lorsque l'une desdites colonnes (S200, S300) se trouve dans un mode dit de séchage, dans lequel le mélange gazeux est amené à circuler dans cette colonne (S200, S300) et qu'au moins de l'eau est adsorbée,
l'autre desdites colonnes (S200, S300) se trouve dans un mode dit de régénération, dans lequel de l'hydrogène délivré en sortie de la colonne (S200, S300) se trouvant dans le mode de séchage, dit gaz de régénération, est amené à circuler dans cette autre colonne (S200, s300) pour la régénérer, c'est-à-dire pour évacuer de cette autre colonne (S200, S300) au moins une quantité d'au moins de l'eau adsorbée,
le système de purification d'hydrogène étant en outre configuré pour maintenir le mode de régénération pendant une durée inférieure ou égale à une durée pendant laquelle il maintient le mode de séchage, et pour commuter les colonnes (S200, S300) entre les modes de séchage et de régénération après une durée prédéfinie d'un cycle prédéfini ; et
- une boucle de recirculation comprenant un éjecteur à effet Venturi (V100), disposé en aval de l'unité de purification catalytique (R100) et en amont du refroidisseur principal (E101), l'éjecteur à effet Venturi (V100) étant configuré pour recevoir en entrée, comme gaz primaire ou moteur, le mélange gazeux provenant de l'unité de purification catalytique (R100) et, comme gaz secondaire, du gaz de régénération ayant circulé dans ladite colonne (S200, S300) de l'unité de sécheur à adsorption se trouvant dans le mode de régénération, et pour délivrer en sortie un mélange du gaz primaire et du gaz secondaire vers le refroidisseur principal (E101).

2. - Système de purification d'hydrogène selon la revendication 1, **caractérisé par le fait que** l'unité de sécheur à adsorption est l'une parmi une unité de sécheur à adsorption à température variable (ATV) et une unité de sécheur à adsorption à pression variable (APV).

3. - Système de purification d'hydrogène selon la revendication 1 ou la revendication 2, **caractérisé par le fait que** le système de purification d'hydrogène comprend en outre une unité de préchauffage (EH100), disposée en amont de l'unité de purification catalytique (R100), configurée pour réchauffer le mélange gazeux reçu en entrée.

4. - Système de purification d'hydrogène selon l'une quelconque des revendications 1 à 3, **caractérisé par le fait que** l'unité de purification catalytique (R100) est une unité configurée pour éliminer de l'oxygène, présent sous forme de dioxygène, ou O₂, du mélange gazeux, par oxydation catalytique, l'unité de purification catalytique (R100) étant alors une unité de type dit DEOXO^{®} et le système de purification d'hydrogène étant alors un système de type dit DEOXODRYER.

5. - Système de purification d'hydrogène selon l'une quelconque des revendications 1 à 4, **caractérisé par le fait que** le refroidisseur principal (E101) est un échangeur thermique à eau de refroidissement configuré pour refroidir le mélange gazeux sans contact direct entre le mélange gazeux et l'eau de refroidissement.

6. - Système de purification d'hydrogène selon la revendication 5, **caractérisé par le fait que** le système de purification comprend en outre une unité de production d'eau froide (X500) raccordée à des conduites d'entrée et de sortie d'eau de refroidissement de l'échangeur thermique à eau de refroidissement.

7. - Système de purification d'hydrogène selon l'une quelconque des revendications 1 à 6, **caractérisé par le fait que** la boucle de recirculation comprend en outre un second refroidisseur (E401), de préférence un refroidisseur à ailettes, disposé en amont de l'éjecteur à effet Venturi (V100) et configuré pour refroidir le gaz de régénération avant son entrée dans l'éjecteur à effet Venturi (V100).

8. - Système de purification d'hydrogène selon l'une quelconque des revendications 1 à 7, **caractérisé par le fait que** le système est configuré de telle sorte que 2 à 13 %, de préférence 5 à 10 %, de l'hydrogène délivré en sortie par la colonne (S200, S300) de l'unité de sécheur à adsorption se trouvant dans le mode de séchage est utilisé comme gaz de régénération pour la colonne (S200, S300) de l'unité de sécheur à adsorption se trouvant dans le mode de régénération, puis est dirigé par la boucle de recirculation dans l'éjecteur à effet Venturi (V100).

9. - Système de purification d'hydrogène selon l'une quelconque des revendications 1 à 8, **caractérisé par le fait que** le système est configuré pour fonctionner selon des cycles de production de 25 h, pendant chacun desquels le système maintient l'une des colonnes (S200, S300) dans le mode de séchage pendant 25 h et maintient l'autre colonne (S200, S300) dans le mode de régénération pendant 10 h, le système commutant les colonnes (S200, S300) entre les modes de séchage et de régénération après 25 h pour passer au cycle suivant.

10. - Système de purification d'hydrogène selon l'une quelconque des revendications 1 à 9, **caractérisé par le fait que** le système comprend en outre un réseau de filtres à poussières (EH400) disposé en aval de l'unité de sécheur à adsorption et configuré pour finaliser la purification de l'hydrogène avant une mise à disposition de l'hydrogène purifié en sortie du système.

11. - Procédé de production d'hydrogène purifié utilisant un système de purification d'hydrogène selon l'une quelconque des revendications 1 à 10, dans lequel un mélange gazeux contenant de l'hydrogène est injecté en entrée du système et de l'hydrogène purifié est récupéré en sortie.
